# EUROPEAN PATENT APPLICATION

(11) **EP 4 206 001 A1**
(43) Date of publication of application: **05.07.2023**
(21) Application number: 22206786.0
(22) Date of filing: 10.11.2022
(51) Int. Cl.: B60C 19/00, B60C 19/12

(54) **PNEUMATIC TIRE**

(30) Priority: 28.12.2021 JP 2021214271
(71) Applicant: Sumitomo Rubber Industries, Ltd., Kobe-shi, Hyogo 651-0072 (JP)
(72) Inventor: MATSUNAMI, Sho, Kobe-shi, 651-0072 (JP); YUKAWA, Naoki, Kobe-shi, 651-0072 (JP); SATO, Takuya, Kobe-shi, 651-0072 (JP)
(74) Representative: Manitz Finsterwald Patent- und Rechtsanwaltspartnerschaft mbB

(57) **Abstract**

Provided is a pneumatic tire that can suppress decrease in air sealing performance due to a sound absorbing material. A pneumatic tire 1 includes: a tread portion 2; a self-sealing sealant layer 10 disposed on a tire inner cavity i side of the tread portion 2; and a sound absorbing material 12, in a form of a sponge, fixed to the sealant layer 10. The sealant layer 10 includes, in a front view of the tire inner cavity i, a first region 101 having a surface that is covered with the sound absorbing material 12 and a second region 102 having a surface that is not covered with the sound absorbing material 12. In a first tire cross section, a sealant layer thickness of at least a part of the first region 101 is larger than a sealant layer thickness of the second region 102.

## Description

### BACKGROUND OF THE INVENTION

### Field of the Invention

The present disclosure relates to a pneumatic tire and specifically relates to a pneumatic tire in which a sealant layer is provided on a tire inner cavity side of a tread portion.

### Background Art

Conventionally, a pneumatic tire in which a sound absorbing material in the form of a sponge has been fixed on a tire inner cavity side of a tread portion in order to reduce noise generated from the tire during running of a vehicle, has been proposed (see Japanese Patent No. 3787343).

In addition, a pneumatic tire including, on a tire inner cavity side of a tread portion thereof, a sealant layer and a sound absorbing material fixed to the sealant layer in order to improve both the noise performance and the puncture sealing performance of the tire, has been proposed in recent years (see Japanese Laid-Open Patent Publication No. 2017-65673). This type of pneumatic tire is expected to exhibit the following advantageous effect. For example, when a through-hole is formed in the tread portion owing to nail treading or the like, a part of the sealant layer flows into the through-hole so as to achieve sealing thereof so that the air sealing performance of the tire is ensured.

However, it was found that the above air sealing performance is not sufficiently obtained in a region, of the sealant layer, having a surface that is covered with the sound absorbing material.

The present inventors conducted various research regarding causes of this insufficiency. As a result, it was found that main causes were as follows. That is, in the region covered with the sound absorbing material, flow of a sealant agent was hindered, fragments of the sound absorbing material broken off by a foreign object remained in a through-hole so as to form a passage for air, and there were other inconveniences.

The present disclosure has been made in view of the above problem, and a main object of the present disclosure is to provide a pneumatic tire that can suppress decrease in air sealing performance due to a sound absorbing material.

### SUMMARY OF THE INVENTION

The present disclosure is directed to a pneumatic tire including: a tread portion; a self-sealing sealant layer disposed on a tire inner cavity side of the tread portion; and a sound absorbing material, in a form of a sponge, fixed to the sealant layer, wherein the sealant layer includes, in a front view of the tire inner cavity, a first region having a surface that is covered with the sound absorbing material and a second region having a surface that is not covered with the sound absorbing material, and, in a first tire cross section, a sealant layer thickness of at least a part of the first region is larger than a sealant layer thickness of the second region.

The pneumatic tire according to the present disclosure can suppress decrease in air sealing performance due to the sound absorbing material, by employing the above configuration.

### BRIEF DESCRIPTION OF THE DRAWINGS

FIG. 1 is a cross-sectional view of a pneumatic tire according to an embodiment;
FIG. 2 is a partial front view of a tire inner cavity;
FIG. 3 is a partial cross-sectional view, of the pneumatic tire, showing a modification of a sealant layer;
FIG. 4 is a partial cross-sectional view, of the pneumatic tire, showing a modification of the sealant layer;
FIG. 5 is a partial cross-sectional view, of the pneumatic tire, showing a modification of the sealant layer;
FIG. 6 is a partial cross-sectional view, of the pneumatic tire, showing a sealant layer in comparative example 1; and
FIG. 7 is a partial cross-sectional view, of the pneumatic tire, showing a sealant layer in comparative example 2.

### DETAILED DESCRIPTION

Hereinafter, an embodiment of the present disclosure will be described with reference to the drawings. It should be understood that the drawings contain exaggerated expressions and expressions that differ from the dimensional ratio of the actual structure in order to help the understanding of the present disclosure. In addition, the same or common elements are denoted by the same reference characters throughout each embodiment, and redundant descriptions thereof are omitted. Furthermore, the specific configurations shown in the embodiment and the drawings are for understanding the contents of the present disclosure, and the present disclosure is not limited to the specific configurations shown.

### [Overall Structure of Tire]

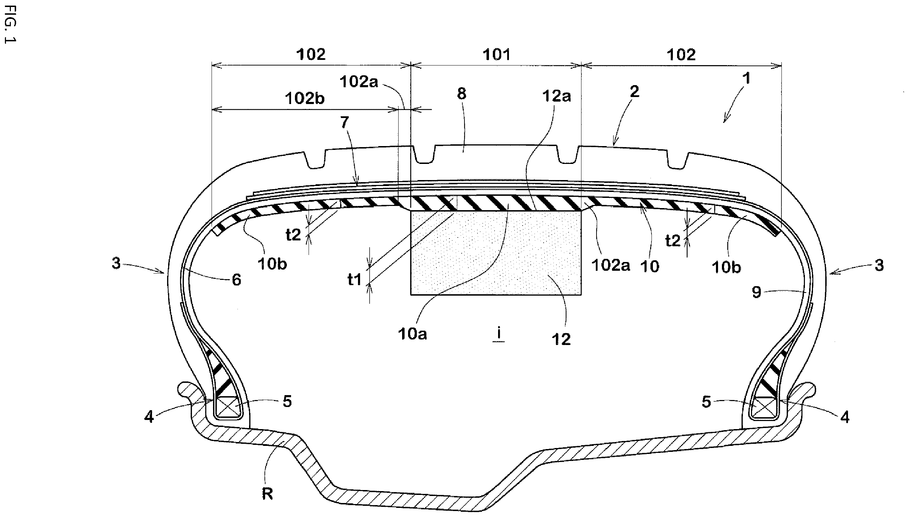

FIG. 1 is a cross-sectional view of a pneumatic tire 1 according to the present embodiment. In the cross-sectional view, the pneumatic tire 1 is in a normal state. The normal state of the pneumatic tire 1 refers to a state for uniquely determining the posture of the pneumatic tire 1 and is a state where: the pneumatic tire 1 is mounted to a normal rim R under a normal internal pressure; and no load is applied to the pneumatic tire 1. Hereinafter, it is understood that, in the present description, dimensions and the like of each component of the pneumatic tire 1 are values measured in the normal state, unless otherwise specified.

In the present description, the "normal rim" refers to a rim having a rim width that is suitable for effectively exhibiting performances of the pneumatic tire 1. Specifically, the "normal rim" is the "standard rim" in the JATMA standard, the "Design Rim" in the TRA standard, or the "Measuring Rim" in the ETRTO standard. In this manner, the "normal rim" can be defined for each standard on which the pneumatic tire 1 is based.

In the present description, the "normal internal pressure" refers to an air pressure that is defined, in a standard system including a standard on which the pneumatic tire 1 is based, by the standard for each tire. The "normal internal pressure" is the maximum air pressure in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

As shown in FIG. 1, the pneumatic tire 1 according to the present embodiment is, for example, a tubeless tire having a radial structure. The pneumatic tire 1 is formed in, for example, a toroidal shape so as to include a tread portion 2, a pair of sidewall portions 3, and a pair of bead portions 4. The pair of bead portions 4 include respective non-stretchable bead cores 5 embedded therein.

The pneumatic tire 1 includes, for example, a carcass 6 extending on and between the bead cores 5, a belt layer 7 disposed inward of the tread portion 2 and outward of the carcass 6 in a tire radial direction, and a tread rubber 8 disposed outward of the belt layer 7. These elements can be provided as appropriate according to a conventional manner. In addition, a band layer (not shown) including a reinforcing cord extending in a tire circumferential direction, or the like may be disposed as necessary between the belt layer 7 and the tread rubber 8.

On a tire inner cavity i side of the carcass 6, an inner liner layer 9 is disposed over substantially the entire region thereof. The inner liner layer 9 is made from an air-impermeable rubber such as isobutylene-isoprene rubber and prevents air in the tire inner cavity i from leaking to outside as a result of permeation.

The pneumatic tire 1 according to the present embodiment includes, on the tire inner cavity i side of the tread portion 2, a self-sealing sealant layer 10 and a sound absorbing material 12, in the form of a sponge, fixed to the sealant layer 10.

### [Sound Absorbing Material]

The sound absorbing material 12 is fixed to the inner side in the tire radial direction of the sealant layer 10 and exposed to the tire inner cavity i. In the present embodiment, an outer surface 12a in the tire radial direction of the sound absorbing material 12 is in direct contact with the sealant layer 10, thereby being held by the sealant layer 10 owing to the adhesiveness of the sealant layer 10.

The sound absorbing material 12 in the present embodiment is formed of a soft sponge resulting from foaming a rubber or a synthetic resin. In a preferable mode, the sound absorbing material 12 is formed of a sponge having open cells. Pores on the surface of and/or inside the sponge convert the vibrational energy of the air in the tire inner cavity i into thermal energy. Therefore, the sound absorbing material 12 can reduce resonance noise and the like during running with the tire.

The sound absorbing material 12 in the present embodiment is configured by, for example, disposing a belt-shaped sponge having a rectangular cross-sectional shape, in a substantially annular shape along the tire circumferential direction. In a preferable mode, both end portions in the tire circumferential direction of the sound absorbing material 12 are brought into contact with each other or are apart from each other at a short interval. In another mode, a plurality of the sound absorbing materials 12 may be provided intermittently in the tire circumferential direction.

The position, the shape, the size, and the like of the sound absorbing material 12 are not particularly limited, and the shape and the size thereof only have to be determined as appropriate so as to enable reduction of noise during running with the tire. The sound absorbing material 12 in FIG. 1 is disposed substantially at the center position in a tire axial direction of the tread portion 2. In the tire cross section shown in FIG. 1, the cross-sectional area of the sound absorbing material 12 is preferably about 5% to 35% of the area of the tire inner cavity i enclosed by the pneumatic tire 1 and the normal rim R.

The material of the sound absorbing material 12 is not particularly limited, but, for example, a polyurethane sponge and the like having excellent weather resistances are suitable. In particular, an ether/ester-based mixed polyurethane sponge is desirable.

The density of the sound absorbing material 12 is not particularly limited. However, for exhibition of a more excellent road noise absorbing effect, the density is, for example, preferably not higher than 60 kg/m³, more preferably not higher than 55 kg/m³, and further preferably not higher than 50 kg/m³. Meanwhile, regarding the lower limit of the density of the sound absorbing material 12, the density is, for example, preferably not lower than 10 kg/m³, more preferably not lower than 15 kg/m³, and further preferably not lower than 20 kg/m³ from the viewpoint of durability and the like.

The hardness of the sound absorbing material 12 is not particularly limited. However, if the hardness of the sound absorbing material 12 is low, a foreign object such as a nail is more likely to pierce the sound absorbing material 12 upon contact with the foreign object. From such a viewpoint, the hardness of the sound absorbing material 12 is, for example, preferably not lower than 20 (N/314 cm²). Meanwhile, if the hardness of the sound absorbing material 12 is excessively high, the noise reduction effect might relatively decrease. From such a viewpoint, the hardness of the sound absorbing material 12 is, for example, preferably not higher than 120 (N/314 cm²). In the present description, the hardness of the sound absorbing material 12 is defined as a hardness measured according to Method D for the hardness test in JIS K6400-2 (2012).

The elongation of the sound absorbing material 12 is not particularly limited. However, if the elongation of the sound absorbing material 12 is high, elastic deformation is likely to be accelerated upon contact with a foreign object so that piercing by the foreign object is further suppressed. From such a viewpoint, the elongation of the sound absorbing material 12 is, for example, preferably not lower than 100% and more preferably not lower than 150%. Meanwhile, the elongation of the sound absorbing material 12 is, for example, preferably not higher than 600% and more preferably not higher than 500% from the viewpoint of, for example, ease of material obtainment and the like. In the present description, the elongation of the sound absorbing material 12 is defined as an elongation that complies with JIS K6400-5 (2012) and that is obtained at break of a test piece.

The tensile strength of the sound absorbing material 12 is not particularly limited, but is, for example, preferably not lower than 40 kPa from the viewpoint of suppressing, for example, damage upon nail treading. Meanwhile, the tensile strength of the sound absorbing material 12 is, for example, preferably not higher than 160 kPa from the viewpoint of cost, productivity, ease of obtainment in the market, and the like for the sound absorbing material 12.

### [Sealant Layer]

The sealant layer 10 is disposed on the tire inner cavity i side of the tread portion 2, i.e., on the further inner side of the tire relative to the inner liner layer 9. The sealant layer 10 in the present embodiment is made from a sealant agent having a predetermined adhesiveness, a predetermined viscosity, and a predetermined fluidity as a conventional sealant layer does. The sealant layer 10 is formed by, for example, applying the sealant agent on the tire inner cavity i side of the tread portion 2.

When a nail penetrates the tread portion 2, the sealant agent is adhered on surroundings of the nail projecting to the inside of the tire inner cavity i, so as to cover the nail. Consequently, the sealant agent prevents leakage of the air inside the tire inner cavity i. Meanwhile, when the nail comes off from the tread portion 2 so as to form a through-hole in the tread portion 2, the sealant agent enters the through-hole according to the internal pressure of the tire or movement of the nail. The self-sealing sealant layer 10 in the present embodiment essentially has these two functions.

The sealant layer 10 is preferably formed in, for example, a region in which nail treading or the like is likely to occur. From such a viewpoint, the sealant layer 10 is preferably formed in a range corresponding to a ground contact region of the tread portion 2. In another mode, the sealant layer 10 may be disposed so as to extend beyond the range corresponding to the ground contact region of the tread portion 2.

In the present description, the "ground contact region of the tread portion" is a region in which ground contact occurs in a standard running state of the pneumatic tire 1 and is defined as, for example, a region in which contact occurs when: a normal load is applied to the pneumatic tire 1 in the normal state; and the pneumatic tire 1 is pressed against a flat surface at a camber angle of 0°.

The sealant agent typically contains a rubber component, a liquid polymer, a crosslinking agent, and the like.

As the rubber component of the sealant agent, a butyl-based rubber such as isobutylene-isoprene rubber or a halogenated isobutylene-isoprene rubber is used, for example. As the rubber component, a rubber component in which the butyl-based rubber and a diene-based rubber have been blended may be used. In this case, the amount of the butyl-based rubber contained in 100 parts by weight of the rubber component is preferably not smaller than 90 parts by weight in order to ensure the fluidity of the sealant agent.

Examples of the liquid polymer of the sealant agent include liquid polybutene, liquid polyisobutene, liquid polyisoprene, liquid polybutadiene, liquid poly-α-olefin, liquid isobutylene, liquid ethylene-α-olefin copolymers, liquid ethylene-propylene copolymers, liquid ethylene-butylene copolymers, and the like. Among these liquid polymers, liquid polybutene is particularly preferable from the viewpoint of the adhesiveness of the sealant agent.

Although the amount of the liquid polymer of the sealant agent only has to be determined as appropriate in consideration of the adhesiveness of the sealant agent, the amount of the liquid polymer contained per 100 parts by weight of the rubber component is preferably not smaller than 50 parts by weight and more preferably not smaller than 100 parts by weight. Meanwhile, the amount of the liquid polymer contained per 100 parts by weight of the rubber component is preferably not larger than 400 parts by weight and more preferably not larger than 300 parts by weight in consideration of the fluidity and the like of the sealant agent.

As the crosslinking agent of the sealant agent, a conventionally-used compound can be used, and, for example, an organic peroxide is preferable. Use of the butyl-based rubber and the liquid polymer in an organic peroxide crosslinking system leads to improvement in adhesiveness, sealing performance, fluidity, processability, and the like. As the organic peroxide, for example, acyl peroxides are preferable, and dibenzoyl peroxide is particularly preferable.

The amount of the organic peroxide (crosslinking agent) contained per 100 parts by weight of the rubber component is preferably not smaller than 0.5 parts by weight and more preferably not smaller than 1.0 part by weight. If the amount is smaller than 0.5 parts by weight, the crosslink density might decrease, resulting in flow of the sealant agent. Regarding the upper limit of this amount, the amount is preferably not larger than 40 parts by weight and more preferably not larger than 20 parts by weight. If the amount is larger than 40 parts by weight, the crosslink density might increase, resulting in decrease in sealing performance.

### [Sealant Layer Thickness]

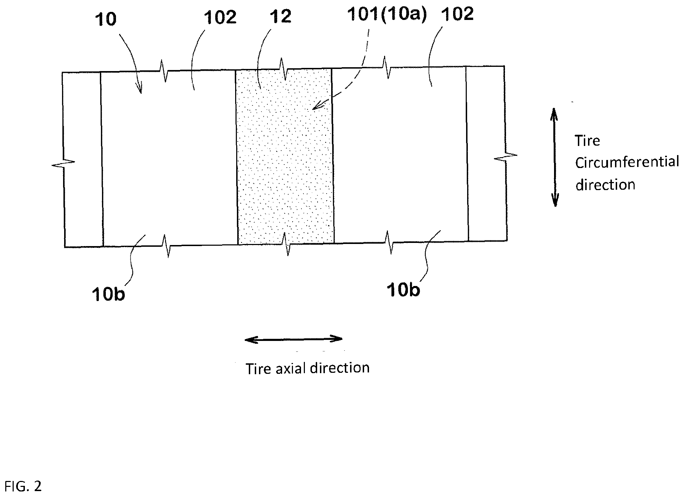

FIG. 2 is a partial front view of the tire inner cavity i. As shown in FIG. 1 and FIG. 2, the sealant layer 10 includes, in the front view of the tire inner cavity i, a first region 101 having a surface that is covered with the sound absorbing material 12 and a second region 102 having a surface that is not covered with the sound absorbing material 12. In the present embodiment, the second region 102 is formed on each of both sides in the tire axial direction of the first region 101.

The sealant layer 10 in the present embodiment is formed such that, in a first tire cross section, a sealant layer thickness of at least a part of the first region 101 is larger than a sealant layer thickness of each of the second regions 102. The first tire cross section means an arbitrarily-selected cross section taken in the tire circumferential direction. The cross section can be captured through, for example, CT scanning.

### [Advantageous Effects of Present Embodiment]

Since the first region 101 has a relatively large sealant layer thickness, decrease in the air sealing performance in the first region 101 due to the sound absorbing material 12 is prevented. For example, increase in the volume of the sealant at the first region 101 leads to improvement in the fluidity or the filling performance of the sealant agent with respect to a through-hole (puncture hole). In addition, since the first region 101 includes the part having a large sealant layer thickness, it is possible to decrease the probability that, when a nail or the like pierces the sound absorbing material 12, fragments of the sound absorbing material 12 enter the through-hole. Meanwhile, since the second region 102 has a relatively small sealant layer thickness, it is also possible to inhibit excessive increase in the weight of the tire, excessive increase in manufacturing cost therefor, and the like.

Although the above requirement of the sealant layer thickness only has to be satisfied in an arbitrarily-selected first tire cross section taken in the tire circumferential direction, the requirement is preferably satisfied at a plurality of locations in the tire circumferential direction. Consequently, the above advantageous effects are obtained at the plurality of locations in the tire circumferential direction. In a more preferable mode, the above requirement of the sealant layer thickness is preferably satisfied over the entire range, in the tire circumferential direction, in which the sound absorbing material 12 is disposed. Consequently, the above advantageous effects can be further assuredly exhibited.

From another viewpoint, in the first tire cross section, an average sealant layer thickness of the first region 101 is set to be larger than an average sealant layer thickness of the second region 102. In such a mode as well, the above advantageous effects can be exhibited. In the present description, each average sealant layer thickness is calculated as a value obtained by dividing the cross-sectional area of the corresponding region of the sealant layer 10 in the first tire cross section by the length in the tire axial direction of the region.

In order to more assuredly exhibit the above advantageous effects, the first region 101 of the sealant layer 10 preferably includes a large-thickness portion 10a having a sealant layer thickness t1 not smaller than 5 mm, for example. In a particularly preferable mode, the large-thickness portion 10a is preferably formed so as to occupy, in the tire axial direction, not lower than 60% of the first region 101. In a further preferable mode, the large-thickness portion 10a is preferably formed so as to occupy the entire range in the tire axial direction of the first region 101. In these modes, the above advantageous effects are further assuredly exhibited. From the viewpoint of inhibiting significant increase in the weight of the sealant layer 10, the sealant layer thickness t1 of the large-thickness portion 10a is, for example, preferably not larger than 8 mm.

The second region 102 of the sealant layer 10 has a surface that is not covered with the sound absorbing material 12. Thus, decrease in the fluidity of the sealant agent due to the sound absorbing material 12 is less likely to occur in the second region 102. Therefore, in the second region 102, even though the sealant layer thickness is relatively small, the air sealing performance can be sufficiently exhibited. From the viewpoint of suppressing increase in the weight of the tire, increase in manufacturing cost therefor, and the like, the second region 102 preferably includes a small-thickness portion 10b having a sealant layer thickness t2 not larger than 4 mm, for example. Meanwhile, from the viewpoint of ensuring air sealing performance at the small-thickness portion 10b, the sealant layer thickness of the small-thickness portion 10b is preferably not smaller than 2 mm, for example.

As shown in FIG. 1, the second regions 102 of the sealant layer 10 in the present embodiment include gradual increase portions 102a each having a sealant layer thickness that is increased toward the first region 101. In a preferable mode, each of the gradual increase portions 102a is connected to a corresponding end portion on the first region 101 side (i.e., the sound absorbing material 12 side). Each of the second regions 102 is essentially not influenced by the sound absorbing material 12. However, at the end portion thereof on the first region 101 side, the sealant agent tends to have a decreased fluidity and a decreased filling performance with respect to a through-hole owing to presence of the sound absorbing material 12 although the amounts of the decreases are small. Considering this, each of the gradual increase portions 102a is provided at the end portion on the sound absorbing material 12 side of the corresponding second region 102. Consequently, at this portion, the volume of the sealant increases and deterioration of air sealing performance can be effectively suppressed. In addition, such a gradual increase portion 102a contributes to smoothing a weight distribution in the tire axial direction of the sealant layer 10 and thus contributes to suppressing undesirable vibrations and the like during running with the tire.

Each of the second regions 102 in the present embodiment includes the corresponding gradual increase portion 102a and a fixed-thickness portion 102b having a sealant layer thickness that is substantially fixed. The gradual increase portion 102a in the present embodiment has a thickness that is continuously increased from the thickness of the fixed-thickness portion 102b of the second region 102 to the thickness t1 of the large-thickness portion 10a of the first region 101. In each of the left and right second regions 102, the length in the tire axial direction of the corresponding gradual increase portion 102a may be, for example, about 3 to 15% of the width in the tire axial direction of the second region 102.

In the present embodiment, as shown in FIG. 2, in the front view of the tire inner cavity i, an area A of each of the small-thickness portions 10b in the sealant layer 10 (i.e., the length in the tire axial direction of the small-thickness portion 10b×the length in the tire circumferential direction of the small-thickness portion 10b) is set to be preferably not lower than 80% and more preferably not lower than 90% of a total area B of the corresponding second region 102. Consequently, significant increase in the weight of the second region 102 of the sealant layer 10 can be inhibited, and deterioration of the fuel economy performance of the tire can be inhibited.

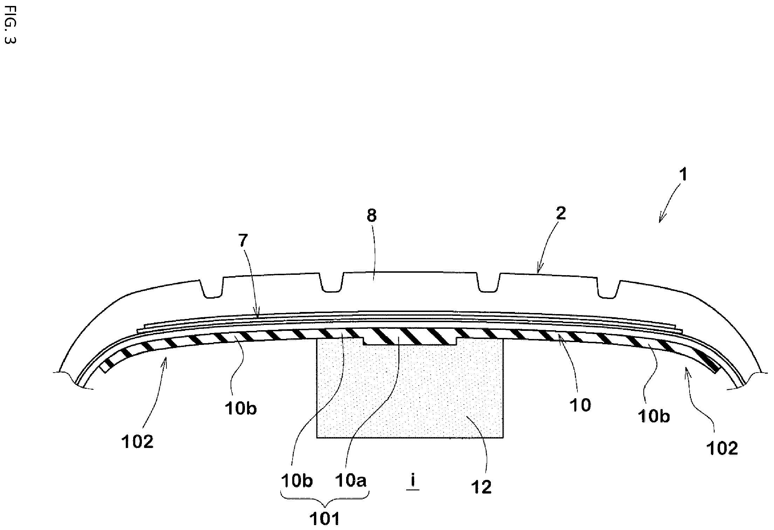

The area A of the small-thickness portion 10b may exceed 100% of the total area B of the second region 102. FIG. 3 shows an example of such a sealant layer 10. As shown in FIG. 3, the first region 101 of the sealant layer 10 includes the large-thickness portion 10a and small-thickness portions 10b. In such an embodiment, a sealant layer 10 having a more decreased weight can be provided. Meanwhile, if the area A of each small-thickness portion 10b is excessively large relative to the total area B of the corresponding second region 102, the proportion of the large-thickness portion 10a in the first region 101 decreases. Consequently, the air sealing performance in the first region 101 might decrease. Therefore, the area A of the small-thickness portion 10b is preferably not higher than 120% of the total area B of the second region 102 in order to sufficiently ensure the air sealing performance in the first region 101 while decreasing the weight of the sealant layer 10.

In addition, in the first region 101 (in particular, in a center portion in the tire axial direction of the first region 101), the fluidity of the sealant agent is likely to be hindered owing to influence of the sound absorbing material 12. Therefore, if the small-thickness portions 10b are included in the first region 101, it is particularly preferable that, as shown in FIG. 3: each of the small-thickness portions 10b is formed at the corresponding end portion in the tire axial direction of the first region 101, influence of the sound absorbing material 12 being comparatively small at the end portion; and the large-thickness portion 10a is formed at the center portion of the first region 101.

Although each embodiment of the present disclosure has been described in detail above, the present disclosure is not limited to the above-described specific disclosure and can be implemented with various changes being made within the scope of the technical idea described in the claims.

### EXAMPLES

Next, more specific and non-limiting examples of the present disclosure will be described.

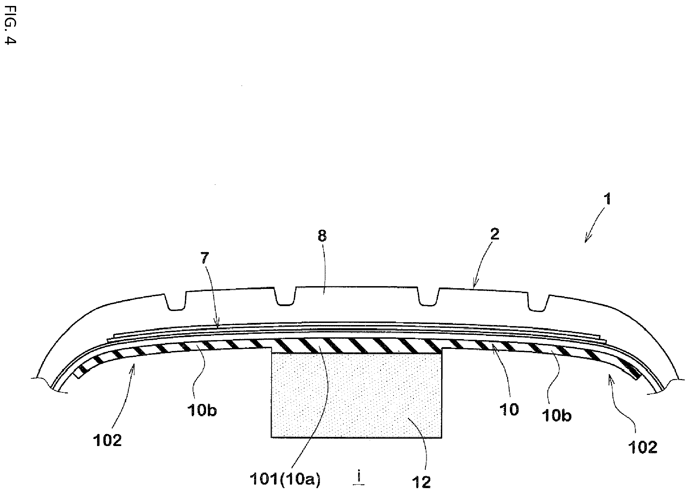

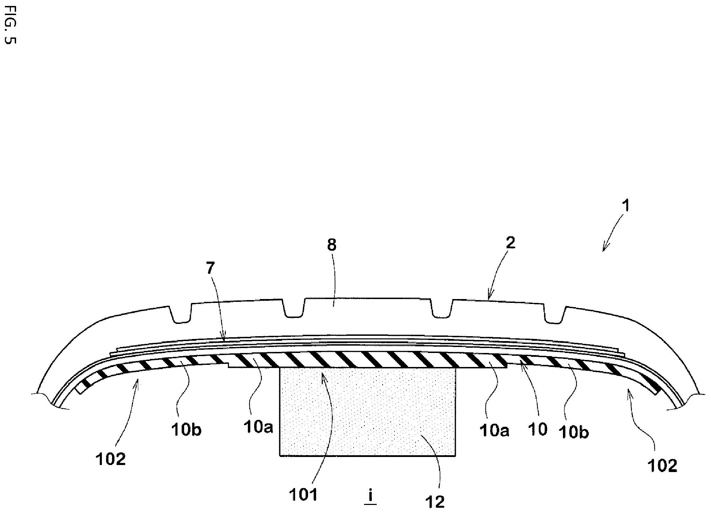

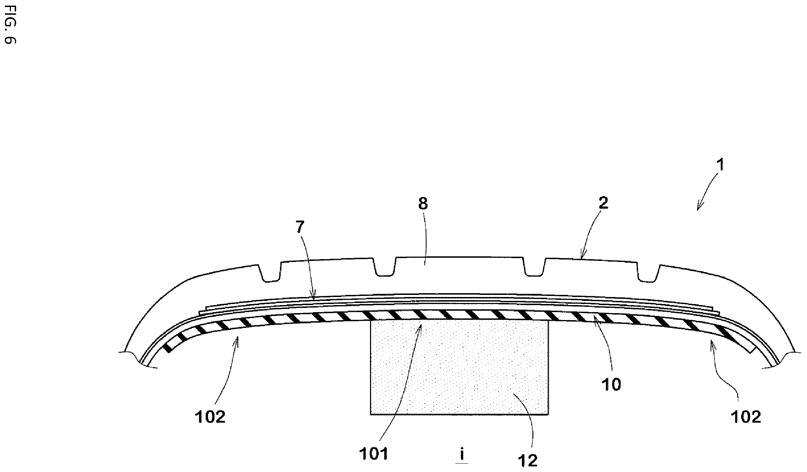

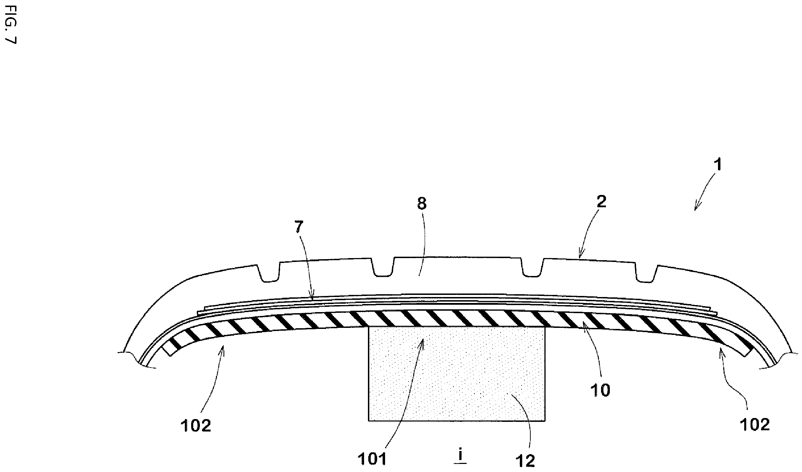

A plurality of types of pneumatic tires each having the basic structure of the tire in FIG. 1 and each including a sealant layer and a sound absorbing material were produced as samples on the basis of specifications indicated in Tables 1 to 3. Specific configurations of the sealant layers are also shown in FIGS. 3 to 7. Specifications common to the tires are as follows.
Tire size: 215/55R17
Cross-sectional area Sa of tire inner cavity with tire being mounted to rim: 194 cm²
Initial internal pressure: 220 kPa
Sound absorbing material: a sponge as a mixture of ether-based bonds and ester-based bonds
Cross-sectional shape of sound absorbing material: a rectangle having a width of 60 mm and a thickness of 50 mm
Cross-sectional area of sound absorbing material/cross-sectional area Sa of tire inner cavity: 15%
Width in tire axial direction of sealant layer: 178 mm
Width in tire axial direction of first region: 60 mm
Widths in tire axial direction of second regions: 59 mm on each of the left and right sides
The formula of each sealant agent was as follows (unit: parts by weight), and the specific gravity thereof was 0.93.
Isobutylene-isoprene rubber: 100
Polybutene: 200
Carbon black: 15
Oil: 15
Crosslinking agent: 7
Crosslinking activator: 7

Next, each of the tires was evaluated regarding the weight and the air sealing performance of the sealant layer. For the air sealing performance, each of the test tires was mounted to a rim first, and the internal pressure thereof was adjusted to the initial internal pressure. Then, 40 nails were driven into the tread portion. Among the nails, 20 nails were driven so as to penetrate the first region of the sealant layer, 10 nails were driven so as to penetrate the left-side second region, and 10 nails were driven so as to penetrate the right-side second region. The size of each of the nails was such that the length thereof was 45 mm and the outer diameter thereof was 5 mm. Then, at the elapse of 10 minutes after the nails were driven, all the nails were pulled out of the tread portion. Then, high-pressure air was supplied into the tire again, and the tire was left for 24 hours. Thereafter, in each of the first region and the second regions, the number of the locations of nail holes that had been sealed by the sealant layer was measured. In Tables 1 to 3, a larger numerical value indicates a better air sealing performance.

**[Table 1]**

| | Comparative example 1 | Comparative example 2 | Example 1 | Example 2 | Example 3 | Example 4 | Example 5 | Example 6 |
|---|---|---|---|---|---|---|---|---|
| Schematic diagram of sealant layer | FIG. 6 | FIG. 7 | FIG. 4 | FIG. 4 | FIG. 4 | FIG. 4 | FIG. 4 | FIG. 4 |
| Thickness of first region (mm) | 3.0 | 6.0 | 6.0 | 5.0 | 8.0 | 10.0 | 6.0 | 6.0 |
| Average sealant layer thickness of first region (mm) | 3.0 | 6.0 | 6.0 | 5.0 | 8.0 | 10.0 | 6.0 | 6.0 |
| Description of first region | Entirely small-thickness portion | Entirely large-thickness portion | Entirely large-thickness portion | Entirety large-thickness portion | Entirely large-thickness portion | Entirely large-thickness portion | Entirely large-thickness portion | Entirely large-thickness portion |
| Thickness of second region (mm) | 3.0 | 6.0 | 3.0 | 3.0 | 3.0 | 3.0 | 2.0 | 4.0 |
| Average sealant layer thickness of second region (mm) | 3.0 | 6.0 | 3.0 | 3.0 | 3.0 | 3.0 | 2.0 | 4.0 |
| Description of second region | Entirely small-thickness portion | Entirely large-thickness portion | Entirely small-thickness portion | Entirety small-thickness portion | Entirely small-thickness portion | Entirely small-thickness portion | Entirely small-thickness portion | Entirely small-thickness portion |
| Area A of small-thickness portion/total area B of second region (%) | - | 100 | 100 | 100 | 100 | 100 | 100 | 100 |
| Weight of sealant layer (g) | 980 | 1960 | 1310 | 1200 | 1540 | 1760 | 1100 | 1530 |
| Air sealing performance in first region | 5 | 15 | 15 | 12 | 20 | 20 | 15 | 15 |
| Air sealing performance in second region | 15 | 15 | 15 | 15 | 15 | 15 | 10 | 20 |

**[Table 2]**

| | Comparative example 1 | Comparative example 2 | Example 7 | Example 8 | Example 9 | Example 10 |
|---|---|---|---|---|---|---|
| Schematic diagram of sealant layer | FIG. 6 | FIG. 7 | FIG. 1 | FIG. 3 | FIG. 3 | FIG. 3 |
| Thickness of first region (mm) | 3.0 | 6.0 | 5.0 | Large- thickness portion: 5.0 Small-thickness portion: 2.0 | Large- thickness portion: 5.0 Small- thickness portion: 2.0 | 5.0 |
| Average sealant layer thickness of first region (mm) | 3.0 | 6.0 | 5.0 | 4.0 | 4.6 | 5.0 |
| Description of first region | Entirely small-thickness portion | Entirely large-thickness portion | Entirely large-thickness portion | Large- thickness portion and small-thickness portion | Large- thickness portion and small-thickness portion | Entirely large-thickness portion |
| Thickness of second region (mm) | 3.0 | 6.0 | Fixed- thickness portion: 3.0 Gradual increase portion: 3.0-5.0 | 2.0 | 2.0 | 2.0 |
| Average sealant layer thickness of second region (mm) | 3.0 | 6.0 | 4.0 | 2.0 | 2.0 | 2.0 |
| Description of second region | Entirely small-thickness portion | Entirely large-thickness portion | As above | Entirely small-thickness portion | Entirely small-thickness portion | Entirely small-thickness portion |
| Area A of small-thickness portion/total area B of second region (%) | - | 100 | 97 | 120 | 108 | 100 |
| Weight of sealant layer (g) | 980 | 1960 | 1230 | 850 | 930 | 990 |
| Air sealing performance in first region | 5 | 15 | 20 | 10 | 11 | 12 |
| Air sealing performance in second region | 15 | 15 | 18 | 10 | 10 | 10 |

**[Table 3]**

| | Comparative example 1 | Comparative example 2 | Example 11 | Example 12 | Example 13 | Example 14 | Example 15 |
|---|---|---|---|---|---|---|---|
| Schematic diagram of sealant layer | FIG. 6 | FIG. 7 | FIG. 5 | FIG. 5 | FIG. 5 | FIG. 5 | FIG. 5 |
| Thickness of first region (mm) | 3.0 | 6.0 | 5.0 | 5.0 | 5.0 | 5.0 | 5.0 |
| Average sealant layer thickness of first region (mm) | 3.0 | 6.0 | 5.0 | 5.0 | 5.0 | 5.0 | 5.0 |
| Description of first region | Entirely small-thickness portion | Entirely large-thickness portion | Entirely large-thickness portion | Entirely large-thickness portion | Entirely large-thickness portion | Entirely large-thickness portion | Entirely large-thickness portion |
| Thickness of second region (mm) | 3.0 | 6.0 | Large- thickness portion: 5.0 Small-thickness portion: 2.0 | Large- thickness portion: 5.0 Small-thickness portion: 2.0 | Large- thickness portion: 5.0 Small- thickness portion: 2.0 | Large- thickness portion: 5.0 Small- thickness portion: 2.0 | Large- thickness portion: 5.0 Small- thickness portion: 2.0 |
| Average sealant layer thickness of second region (mm) | 3.0 | 6.0 | 2.3 | 3.0 | 3.8 | 4.3 | 4.7 |
| Description of second region | Entirely small-thickness portion | Entirely large-thickness portion | Large- thickness portion and small-thickness portion | Large- thickness portion and small-thickness portion | Large- thickness portion and small-thickness portion | Large- thickness portion and small-thickness portion | Large- thickness portion and small-thickness portion |
| Area A of small-thickness portion/total area B of second region (%) | - | 100 | 92 | 66 | 41 | 24 | 10 |
| Weight of sealant layer (g) | 980 | 1960 | 1040 | 1210 | 1370 | 1480 | 1570 |
| Air sealing performance in first region | 5 | 15 | 12 | 12 | 12 | 12 | 12 |
| Air sealing performance in second region | 15 | 15 | 11 | 12 | 11 | 12 | 19 |

As a result of the tests, it has been confirmed that the pneumatic tire in each of the examples exhibits favorable air sealing performance in the first region covered with the sound absorbing material with the weight of the sealant layer being lower than that in comparative example 2.

### [Additional Notes]

The present disclosure includes the following aspects.

### [Present Disclosure 1]

A pneumatic tire including:
a tread portion;
a self-sealing sealant layer disposed on a tire inner cavity side of the tread portion; and
a sound absorbing material, in a form of a sponge, fixed to the sealant layer, wherein
the sealant layer includes, in a front view of the tire inner cavity, a first region having a surface that is covered with the sound absorbing material and a second region having a surface that is not covered with the sound absorbing material, and,
in a first tire cross section, a sealant layer thickness of at least a part of the first region is larger than a sealant layer thickness of the second region.

### [Present Disclosure 2]

The pneumatic tire according to Present Disclosure 1, wherein
the first region includes a large-thickness portion having a sealant layer thickness t1 of 5 to 8 mm.

### [Present Disclosure 3]

The pneumatic tire according to Present Disclosure 2, wherein
the second region includes a small-thickness portion having a sealant layer thickness t2 of 2 to 4 mm.

### [Present Disclosure 4]

The pneumatic tire according to Present Disclosure 2 or 3, wherein
the large-thickness portion is formed so as to occupy, in a tire axial direction, not lower than 60% of the first region.

### [Present Disclosure 5]

The pneumatic tire according to Present Disclosure 2 or 3, wherein
the large-thickness portion is formed so as to occupy an entire range in a tire axial direction of the first region.

### [Present Disclosure 6]

The pneumatic tire according to Present Disclosure 3, wherein
a center portion in a tire axial direction of the first region is formed as the large-thickness portion, and
each of both end portions in the tire axial direction of the first region is formed as the small-thickness portion.

### [Present Disclosure 7]

The pneumatic tire according to Present Disclosure 3, wherein,
in the front view of the tire inner cavity, an area A of the small-thickness portion in the sealant layer is not lower than 80% of a total area B of the second region.

### [Present Disclosure 8]

The pneumatic tire according to Present Disclosure 7, wherein
the area A of the small-thickness portion is not higher than 120% of the total area B of the second region.

### [Present Disclosure 9]

The pneumatic tire according to any one of Present Disclosures 1 to 8, wherein
the second region includes a gradual increase portion having a sealant layer thickness that is increased toward the first region.

### [Present Disclosure 10]

The pneumatic tire according to any one of Present Disclosures 1 to 8, wherein
the sound absorbing material has a density of 5 to 60 kg/m³.

### [Present Disclosure 11]

The pneumatic tire according to any one of Present Disclosures 1 to 9, wherein
the sound absorbing material has an elongation of 100% to 600%.

### [Present Disclosure 12]

The pneumatic tire according to any one of Present Disclosures 1 to 10, wherein
the sound absorbing material has a hardness of 20 to 120 (N/314 cm²).

### [Present Disclosure 13]

The pneumatic tire according to any one of Present Disclosures 1 to 11, wherein
the sound absorbing material is an ether/ester-based mixed polyurethane sponge.

### [Present Disclosure 14]

A pneumatic tire including:
a tread portion;
a self-sealing sealant layer disposed on a tire inner cavity side of the tread portion; and
a sound absorbing material, in a form of a sponge, fixed to the sealant layer, wherein
the sealant layer includes, in a front view of the tire inner cavity, a first region having a surface that is covered with the sound absorbing material and a second region having a surface that is not covered with the sound absorbing material, and,
in a first tire cross section, an average sealant layer thickness of the first region is larger than an average sealant layer thickness of the second region.

## Claims

1. A pneumatic tire (1) comprising:
a tread portion (2);
a self-sealing sealant layer (10) disposed on a tire inner cavity (i) side of the tread portion (2); and
a sound absorbing material (12), in a form of a sponge, fixed to the sealant layer (10), wherein
the sealant layer (10) includes, in a front view of the tire inner cavity (i), a first region (101) having a surface that is covered with the sound absorbing material (12) and a second region (102) having a surface that is not covered with the sound absorbing material (12), and,
in a first tire cross section, a sealant layer thickness of at least a part of the first region (101) is larger than a sealant layer thickness of the second region (102).

2. The pneumatic tire (1) according to claim 1, wherein
the first region (101) includes a large-thickness portion (10a) having a sealant layer thickness t1 of 5 to 8 mm.

3. The pneumatic tire (1) according to claim 2, wherein
the second region (102) includes a small-thickness portion (10b) having a sealant layer thickness t2 of 2 to 4 mm.

4. The pneumatic tire (1) according to claim 2 or 3, wherein
the large-thickness portion (10a) is formed so as to occupy, in a tire axial direction, not lower than 60% of the first region (101).

5. The pneumatic tire (1) according to claim 2 or 3, wherein
the large-thickness portion (10a) is formed so as to occupy an entire range in a tire axial direction of the first region (101).

6. The pneumatic tire (1) according to claim 3, wherein
a center portion in a tire axial direction of the first region (101) is formed as the large-thickness portion (10a), and
each of both end portions in the tire axial direction of the first region (101) is formed as the small-thickness portion (10b).

7. The pneumatic tire (1) according to claim 3, wherein,
in the front view of the tire inner cavity (i), an area A of the small-thickness portion (10b) in the sealant layer (10) is not lower than 80% of a total area B of the second region (102).

8. The pneumatic tire (1) according to claim 7, wherein
the area A of the small-thickness portion (10b) is not higher than 120% of the total area B of the second region (102).

9. The pneumatic tire (1) according to any one of claims 1 to 8, wherein
the second region (102) includes a gradual increase portion (102a) having a sealant layer thickness that is increased toward the first region (101).

10. The pneumatic tire (1) according to any one of claims 1 to 8, wherein
the sound absorbing material (12) has a density of 5 to 60 kg/m³.

11. The pneumatic tire (1) according to any one of claims 1 to 9, wherein
the sound absorbing material (12) has an elongation of 100% to 600%.

12. The pneumatic tire (1) according to any one of claims 1 to 10, wherein
the sound absorbing material (12) has a hardness of 20 to 120 (N/314 cm²).

13. The pneumatic tire (1) according to any one of claims 1 to 11, wherein
the sound absorbing material (12) is an ether/ester-based mixed polyurethane sponge.

14. A pneumatic tire (1) comprising:
a tread portion (2);
a self-sealing sealant layer (10) disposed on a tire inner cavity (i) side of the tread portion (2); and
a sound absorbing material (12), in a form of a sponge, fixed to the sealant layer (10), wherein
the sealant layer (10) includes, in a front view of the tire inner cavity (i), a first region (101) having a surface that is covered with the sound absorbing material (12) and a second region (102) having a surface that is not covered with the sound absorbing material (12), and,
in a first tire cross section, an average sealant layer thickness of the first region (101) is larger than an average sealant layer thickness of the second region (102).
